Europäisches Patentamt

European Patent Office

Office européen des brevets

(11) Veröffentlichungsnummer: **0 470 064 B1**

(12) **EUROPÄISCHE PATENTSCHRIFT**

(45) Veröffentlichungstag der Patentschrift: **07.12.94**

(21) Anmeldenummer: **91890146.3**

(22) Anmeldetag: **09.07.91**

(51) Int. Cl.⁵: **B60K 5/12**

(54) **Brennkraftmaschine.**

(30) Priorität: **31.07.90 AT 1610/90**

(43) Veröffentlichungstag der Anmeldung:
**05.02.92 Patentblatt 92/06**

(45) Bekanntmachung des Hinweises auf die
Patenterteilung:
**07.12.94 Patentblatt 94/49**

(84) Benannte Vertragsstaaten:
**AT DE FR GB IT SE**

(56) Entgegenhaltungen:
**EP-A- 0 081 085**
**EP-A- 0 347 666**
**DE-A- 2 849 860**
**DE-A- 3 901 737**
**GB-A- 2 222 657**

**PATENT ABSTRACTS OF JAPAN vol. 12, no.**
**485 (M-777)(3332) 19. Dezember 1988**

**PATENT ABSTRACTS OF JAPAN vol. 14, no.**
**159 (M-956)(4102) 28. Maerz 1990**

(73) Patentinhaber: **AVL Gesellschaft für Verbren-**
**nungskraftmaschinen und Messtechnik**
**mbH.Prof.Dr.Dr.h.c. Hans List**
**Kleiststrasse 48**
**A-8020 Graz (AT)**

(72) Erfinder: **Cichocki, Rainer, Dipl.-Ing.**
**Otto-Loewi-Gasse 6**
**A-8042 Graz/St. Peter (AT)**
Erfinder: **Brandl, Franz, Dipl.-Ing.Dr.techn.**
**Birkenweg 8**
**A-8062 Kumberg (AT)**
Erfinder: **Skatsche, Othmar, Dipl.-Ing.**
**Körblergasse 26**
**A-8010 Graz (AT)**
Erfinder: **Melde-Tuczai, Dipl.-Ing.**
**Wittenbauerstrasse 77a**
**A-8010 Graz (AT)**
Erfinder: **Harms, Klaus-Christoph, Dr.**
**Attemsgasse 11**
**A-8010 Graz (AT)**

(74) Vertreter: **Krause, Walter, Dr. Dipl.-Ing. et al**
**Postfach 200**
**Singerstrasse 8**
**A-1010 Wien (AT)**

## Beschreibung

Die Erfindung betrifft eine Brennkraftmaschine mit einer schallführenden Innenstruktur, im wesentlichen bestehend aus Zylinderblock, Zylinderkopf und Kurbelwellenlager, welche über Halterungen mit Einrichtungen zur Geräuschminderung abgestützt ist, wobei die Brennkraftmaschine eine Vorzugsweise geschlossene, schalldämmende Außenstruktur aufweist, welche mit der Innenstruktur über zumindest drei der jeweils eine Einrichtung zur Schallminderung aufweisenden Halterungen verbunden ist.

Aus der DE-OS 28 48 860 ist eine Brennkraftmaschine nach dem Oberbegriff des Anspruchs 1 bekannt, bei welcher die Einrichtung zur Schallminderung aus passiven Elementen besteht, die die Körperschallübertragungnur unbefriedigend vermindern können.

Einrichtungen zur aktiven Geräuschminderung sind seit längerem bekannt. Mit Erfolg verwendet werden solche Systeme vor allem bei der Minderung von Luftschall in Rohren und Leitungen, z.B. in Klimaschächten, Verbrennungsanlagen und Auspuffanlagen. Im einfachen Fall wird dabei dem zu mindernden Primärschall mit Hilfe eines Lautsprechers ein gleich großer und um 180° phasenverschobener "Anti-Schall" überlagert, der dem Primärschall entgegenwirkt und ihn durch destruktive Interferenz gerade kompensiert. Dabei wird entweder mit einem Mikrophon oder direkt von der Primärschallquelle ein Signal gewonnen, aus dem eine Regel- bzw. Steuereinheit das Signal zur Ansteuerung des Lautsprechers erzeugt.

Dieser einfachste Fall ist aber nur in eindimensionalen, quasi unendlich ausgedehnten und daher reflexionsfreien Systemen gegeben. Bei realen Systemen muß durch geeignete, meist nur empirisch ableitbare Maßnahmen erreicht werden, daß einerseits die Geräuschminderung im gesamten maßgeblichen Ortsbereich gewährleistet ist, und daß andererseits keine Selbsterregung des Systems zu Eigenschwingungen stattfindet. Für mehrdimensionale Systeme mit reflektierenden Strukturen und Begrenzungen sind solche Maßnahmen häufig unmöglich oder mit enormem Aufwand an Sensorik, Aktorik und vor allem mit komplizierter Signalverarbeitung und Regelungstechnik verbunden.

Die geschilderte Situation scheint die Nutzung der aktiven Geräuschminderung bei Brennkraftmaschinen zu verhindern.

Im praktischen Motorbetrieb fallen vor allem zwei Schwingungsverhalten auf, die für den abgestrahlten Luftschall und die Motorvibrationen sowie die Fahrzeuganregungen infolge der Motorvibrationen maßgebend sind, nämlich das tieffrequente und das hochfrequente Schwingungsverhalten. Die tieffrequenten Schwingungen rühren beispielsweise bei einem 4-Zylinder Reihenmotor von den Massenkräften 2. Ordnung her. Sie liegen zwischen 20 und 200 Hz. Diese können mit einem Massenausgleich 2. Ordnung ausgeglichen werden, welcher jedoch einen großen Aufwand erfordert. Bei Brennkraftmaschinen ohne diesen Massenausgleich können diese für das Fahrzeug unangenehmen Schwingungsanregungen mit aufwendigen Motoraufhängungen bzw. Halterungen für die Innenstruktur verringert werden.

Derartige Halterungen mit Einrichtungen zur aktiven Geräuschminderung im Zusammenhang mit Brennkraftmaschinen sind beispielsweise aus der dieser Erfindung zugrundeliegenden DE-OS 34 19 437 bekanntgeworden. Die hier als hydraulisch gedämpftes Motorlager bezeichnete Einrichtung weist zwei durch eine Zwischenplatte mit Drosselstelle getrennte, mit einer hydraulischen Flüssigkeit gefüllte Kammern auf, wobei die motorseitige Kammer einen aktiven, in Abhängigkeit von vorgebbaren Betriebsparametern steuerbaren Schwingungserreger (Aktor) aufweist. Mit diesem Schwingungserreger, der pneumatisch, hydraulisch oder elektrodynamisch arbeiten kann, können gezielt Schwingungen in Gegenphase zu jenen in der Halterung erzeugt werden, wodurch die Weiterleitung des Körperschalls unterbunden wird. Nachteiligerweise kann mit dieser Einrichtung jedoch der abgestrahlte Luftschall nicht beeinflußt werden.

Weiters zeigt die EP-A3 0 347 666 eine aktive schwingungsdämpfende und schwingungskompensierende Lageranordnung für Brennkraftmaschinen mit einem piezoelektrischen Aktorelement und Hydraulikdruckräumen. Dabei ist eine die piezokeramischen Elemente aufweisende Aktuatorsäule in einem topfförmig gestalteten Widerlager angeordnet. Die Aktuatorsäule ist von einer Rohrfeder umgeben, welche die Aktuatorsäule an einem Ende gegen das Widerlager abstützt und am anderen Ende an einer in Richtung der Motorlängsachse beweglichen Membran angreift. Durch Steuersignale werden die piezokeramischen Elemente in ihrer Dicke verändert, was eine auf die Membran übertragene Axialbewegung der Aktuatorsäule verursacht. Die Bewegung der Membran wird über einen flüssigkeitsgefüllten Arbeitsraum und ein Federelement auf einen in Motorlagerlängsachse angeordneten Stehbolzen auf den Motorblock übertragen. Auch hier kann der abgestrahlte Luftschall nicht beeinflußt werden.

In der JP-A 63-203941 wird eine Einrichtung zur aktiven Schallminderung, bestehend aus einem Aktor- und einem Sensorelement gezeigt. Dabei wird ein in ein Gehäuse eingespannter piezoelektrischer Bimorph, bestehend aus biegesensitiven, piezoelektrischen Platten, durch ein stangenförmiges Kontaktglied in einer normal zu den Platten stehenden Richtung verbogen. Die Auslenkung wird durch die Sensorelektrode festgestellt, worauf über das Aktorelement die longitudinale (eindimensionale) Schwingung gedämpft wird. Der Einsatz dieser eindimensional wirkenden, den abgestrahlten Luftschall nicht beeinflussenden Vorrichtung ist bei mehrdimensionalen Systemen, wie Brennkraftmaschinen, nur mit erheblich großem Aufwand möglich.

Weiters ist aus der US-PS 4 600 863 eine ähnliche Einrichtung bekannt geworden, bei welcher eine Halterung über ein Sensorelement und ein Aktorelement verfügt, welche über einen Regelkreis in Verbindung stehen. Weiters weist diese Halterung ein Element auf, über welches nur parallel zur Längsachse der Halterung wirkende Kräfte übertragen werden können. Die genannte Einrichtung verwendet sowohl mechanische als auch magnetostriktive Aktoren. Im Hinblick auf die Ausbreitung von Luftschall kann jedoch auch diese Einrichtung nicht geräuschmindernd eingesetzt werden.

Aufgabe der Erfindung ist es, eine Brennkraftmaschine der eingangs genannten Art derart weiterzubilden, daß die schallführende Innenstruktur schwingungsmäßig weitgehend vom Motorlager bzw. vom Fahrzeug abgekoppelt ist, wobei auch der abgestrahlte Luftschall minimiert werden soll.

Erfindungsgemäß wird diese Aufgabe dadurch gelöst, daß jede Einrichtung zur aktiven Schallminderung vorgesehen ist und zumindest ein Sensorelement zur Erfassung von Körperschallschwingungen sowie zumindest ein Aktorelement zur Erzeugung gegenphasiger Körperschallschwingungen aufweist, wobei eine elektronische Regel- und Steuereinrichtung vorgesehen ist, über welche die Aktorelemente mit den Sensorelementen in Verbindung stehen, und daß jeweils ein Anlenkpunkt jeder Halterung an der Innen- oder Außenstruktur gelenkig ausgeführt ist. Die Grundidee einer solchen aktiv geräuschgeminderten Brennkraftmaschine besteht darin, daß die kraftführende Innenstruktur durch nur wenige Verbindungselemente mit der Außenstruktur verbunden wird, sodaß nur wenige, definierte Körperschallschwingungsmoden zugelassen werden, deren Übertragung über die als Schallwellenleiter wirkenden Halteorgane durch geeignete Vorrichtungen gehindert wird. Der zu mindernde Schall wird sozusagen kanalisiert, wodurch auf jeden einzelnen quasi eindimensionalen Schallübertragungskanal das Prinzip der aktiven Geräuschminderung angewandt werden kann. Der Luftschall wird durch die schalldämmende Außenstruktur wirksam vermindert.

In einer Weiterbildung der Erfindung ist vorgesehen, daß jeweils ein Anlenkpunkt jeder Halterung als Kugelgelenk ausgeführt ist. Dadurch kann die Anzahl jener Körperschallschwingungsmoden, welche von den Halterungen übertragen werden, auf ein Minimum reduziert werden.

Es kommt also darauf an, die Verbindung der kraftführenden Innenstruktur mit der schalldämmenden Außenstruktur auf folgende Art auszuführen:

1. Die Anzahl der Halterungen wird gering gehalten und beträgt mindestens drei, von denen zwei vorzugsweise in der Nähe der drehmomentabgebenden Schwungradseite paarweise vorgesehen werden, sowie eine zur Abstützung an der Gegenschwungradseite.

2. Die Anlenkstellen an der Innenstruktur werden so ausgewählt, daß von den Halterungen möglichst wenig Körperschall abgegriffen werden kann. Vorzugsweise sind das Stellen mit hoher Steifigkeit (Impedanz), bei denen die Bewegungsamplituden der dominierenden Körperschallschwingungsmoden klein bleiben.

3. Die Art und die Anbringung der Halterungen wird vorrangig dadurch bestimmt, daß der Motor in der richtigen Position gehalten und alle abgegebenen Kräfte und Momente aufgenommen werden müssen. Das setzt bestimmte kraft - und bewegungsschlüssige Verbindungen voraus, die für die entsprechenden Körperschallschwingungsmoden schalleitend sind. Sonstige Körperschallschwingungsmoden sollen möglichst nicht übertragen werden können. Erreichbar ist das vorzugsweise dadurch, daß die Halterung in Bewegungsrichtung der zu hindernden Mode möglichst frei beweglich ist, z.B. gleitend oder weich gefedert. Die entsprechenden Einrichtungen wie z.B. Gelenke und Federn, können dabei in der Halterung selbst und/oder an den Anlenkpunkten vorgesehen sein.

4. Die Einrichtungen zur aktiven Geräuschminderung weisen ein oder mehrere Aktoren bzw. Aktorsysteme auf, die geeignet sind, dem störenden Körperschall in der Halterung einen entsprechenden Gegenschall zu überlagern und dadurch eine aktive Geräuschminderung zu bewirken, dabei werden die verschiedenen Körperschallschwingungsmoden als getrennte Kanäle betrachtet und die störendsten einzeln gemindert. Wesentlich ist, daß auch bei Ausfall eines Aktors, z.B. durch Ausfall der Steuerenergie, die Halterung seine Hauptaufgabe, den Motor zu halten, noch erfüllen kann. Als Aktoren kommen vorzugsweise piezoelektrische, elektrodynamische, mechanische und hydraulische in Frage, aber auch z.B. elektrostriktive, magnetostriktive, kapazitive oder pneumatische, und Kombinationen dieser Wirkungsweisen. Entgegenwirken können sie Kräften und Bewegungen, z.B. in Längsrichtung der Halterung (Druck und Zug "longitudinal"). in den Querrichtungen dazu (Schub, "transversal"), in Drehrichtung um die Längsachse (Torsionsmoment) und um dazu senkrechte Achsen (Biegomomente).

Erfindungsgemäß ist beispielsweise vorgesehen, daß das Sensorelement und das Aktorelement jeweils aus zumindest einem piezoelektrischen Element bestehen, dessen Elektrodenflächen über` zumindest einen Regelkanal der Regel- und Steuereinrichtung verbunden sind, bzw. daß zumindest zwei piezoelektrische Elemente über ein Vorspannelement zusammengefaßt sind, wobei jedes piezoelektrische Element zumindest drei mit Elektroden versehene Bereiche aufweist und die einander zugeordneten Bereiche zweier piezoelektrischer Elemente jeweils über einen Regelkanal der Regel- und Steuereinrichtung in Verbindung stehen und ein Paar aus Aktor- und Sensorelement bilden.

Eine erfindungsgemäße Alternative zur zuletzt vorgeschlagenen Ausführung ist dadurch gegeben, daß mehrere Einheiten aus Aktor- und Sensorelementen, in einer auf die Längsachse der Halterung normal stehenden Ebene angeordnet sind, wobei jedes Sensorelement und jedes Aktorelement jeweils aus einem piezoelektrischen Element besteht, sowie daß jede Einheit über einen eigenen Regelkanal der Regel- und Steuereinrichtung verfügt. Mit diesen Halterungen können auch Momente übertragen werden, wobei Schwingungskräften senkrecht zur Längsachse der Halterungen entgegengewirkt wird.

Besonders zu beachten ist, daß eventuell Einrichtungen zur Impedanzanpassung der Einrichtung zur Geräuschminderung an das schwingende System erforderlich sind. So werden z.B. von piezoelektrischen Aktoren große Schallkäfter, aber nur geringe Wegamplituden erzeugt . Durch geeignete Transformatoren kann aber die aufgebrachte Leistung im benötigten Verhältnis von Schallkraft zu, Schallschnelle abgegeben werden.

So ist erfindungsgemäß vorgesehen, daß das Sensorelement und das Aktorelement jeweils aus einem scheibenförmigen piezoelektrischen Element bestehen, welche Elemente sich getrennt durch eine zentrale Elektrodenplatte zwischen zwei Membranen befinden, daß an beiden Membranen miteinander verbindbare Gehäuseteile der Einrichtung zur Geräuschminderung angrenzen, wovon zumindest ein Gehäuseteil einen von der angrenzenden Membran abgeschlossenen Druckraum zur Aufnahme einer Hydraulikflüssigkeit aufweist, wobei der Druchraum mit einem Kolbenraum verbunden ist, dessen von einem Federelement belasteter Kolben mit einer zu einem Anlenkpunkt führenden Strebe verbunden ist.

Schließlich kann erfindungsgemäß auch vorgesehen sein, daß der zumindest eine Druckraum einen hydraulischen Anschluß aufweist, über welche an der Brennkraftmaschine abgreifbare, zu Schwingungen verursacht durch Massenkräfte 2. Ordnung phasenverschobene Druckwellen in den Druckraum einsteuerbar sind.

Die Erfindung wird im folgenden anhand von Zeichnungen näher erläutert. Es zeigen:

Fig. 1 eine erfindungsgemäße Brennkraftmaschine mit einer Einrichtung zur aktiven Geräuschminderung,

Fig. 2 ein Beispiel einer Regelelektronik für die Einrichtung zur aktiven Gerätuschminderung,

Fig. 3 den idealisierten Frequenzgang der Regelelektronik nach Fig. 2, sowie die

Fig. 4 bis 9 Ausführungsvarianten von Einrichtungen zur aktiven Geräuschminderung.

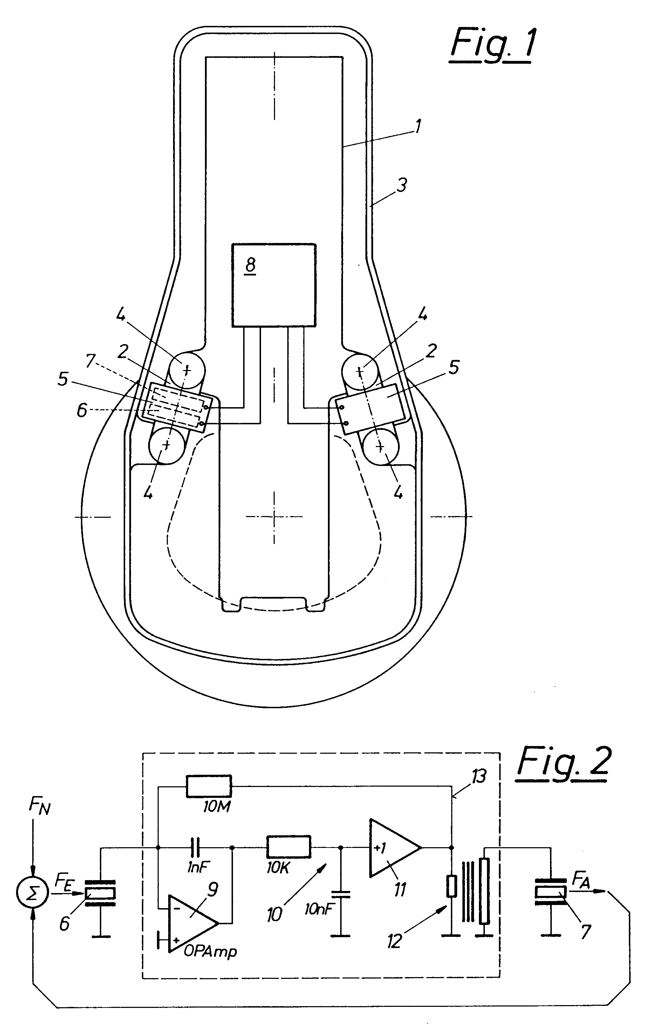

Entsprechend Fig. 1 wird die schallführende Innenstruktur 1 einer Brennkraftmaschine, im wesentlichen bestehend aus Zylinderblock, Zylinderkopf und Kurbelwellenlager, an mindestens drei (dargestellt zwei) Stellen mittels Halterungen 2 mit einer schalldämmenden Außenstruktur 3 verbunden. Die Halterungen 2 werden an Anlenkpunkten 4 sowohl an der Innenstruktur 1 als auch an der schalldämmenden Außenstruktur 3 befestigt. Zwischen den beiden Anlenkpunkten 4 befindet sich eine Einrichtung 5, welche die aktive Geräuschminderung bewirkt. Die Anlenkpunkte 4 befinden sich and Stellen, hoher mechanischer Steifigkeit (Impedanz), sodaß nur geringe Bewegungsamplituden auftreten.

Fig. 2 zeigt beispielhaft eine einfache Ausführung der zu jedem Paar von Sensor 6 und Aktor 7 gehörigen Regel und Steuerelektronik 8 (Fig.1). Das vom piezoelektrischen Sensor 6 kommende Ladungssignal 7 wird in einer Ladungsverstärkerstufe 9, einem passiven Tiefpaßfilter 10 und einem Leistungsverstärker (Booster) 11 vorstärkt und über einen Transformator 12 zur elektrischen Impedanzanpassung an den piezoelektrischen Aktor 7 angelegt. Eine ohmsche Rückkopplung 13 stabilisiert den Gleichstrom-Arbeitspunkt und begrenzt den wirksamen Frequenzbereich bei tiefen Frequenzen. Da sich Aktor 7 und Sensor 6 praktisch am selben Ort befinden, wird im Idealfall die vom Motor kommende Kraft $F_N$ durch die von Aktor erzeugte Kraft $F_A$ kompensiert. Nicht kompensierte Kräfte $F_E$ werden vom Sensor 6 erfaßt und verarbeitet.

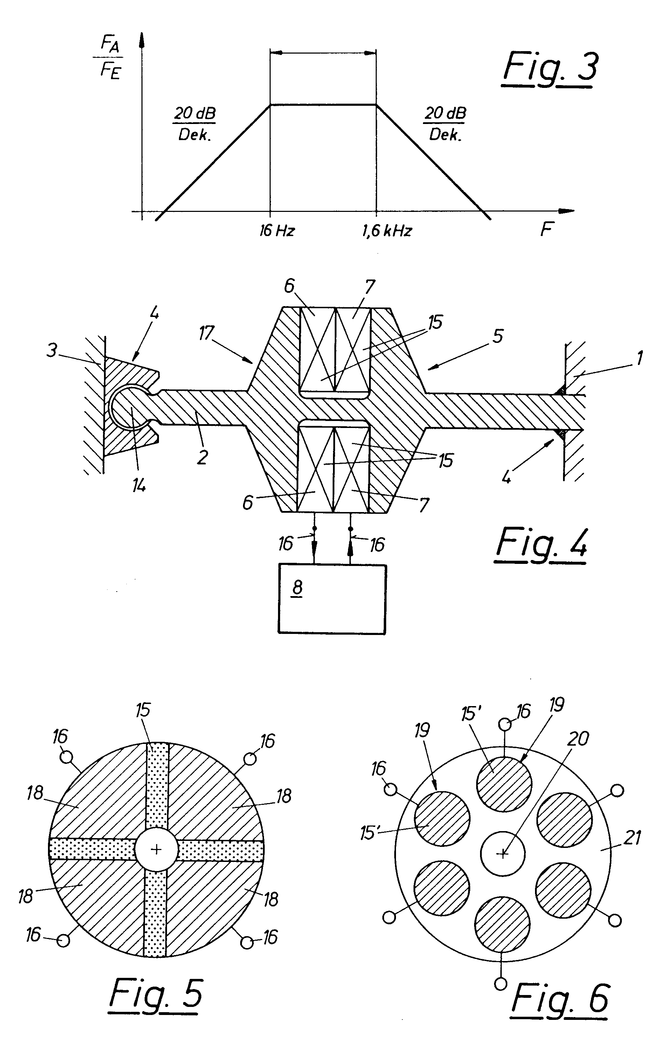

Fig. 3 zeigt den idealisierten Frequenzgang der Regelelektronik nach Fig. 2. Das Betragsverhältnis von erzeugter Schallkraft $F_A$ am Aktor zu registrierter Schallkraft $F_E$ am Sensor wird in doppeltlogarithmischem Maßstab über der Frequenz F aufgetragen. Diese Kennlinie stellt auch die Reglercharakteristik dar. Man könnte von einem Proportionalregler sprechen, der nur im gewünschten Frequenzbereich wirksam wird, wobei der Frequenzbereich in diesem einfachen Fall durch Filter 1. Ordnung begrenzt wird.

Die Konstruktion muß derart ausgeführt sein, daß keine mechanischen Resonanzen im Bereich des Frequenzbandes der Regelung angeregt worden können, d.h. die Verankerungen und Halterungen müssen in Bezug auf die anregbaren Körperschallschwingungsmoden steif und leicht ausgeführt werden.

Fig. 4 zeigt eine Halterung 2, bei welcher der Anlenkpunkt 4 z.B. an der Innenstruktur 1 starr und der andere Anlenkpunkt 4 an der Außenstruktur 3 gelenkig, z.B. als Kugelgelenk 14 ausgeführt ist, sodaß nur mehr die longitudinalen Kräfte und die beiden Biegemomente übertragen worden können. Als aktive Elemente dienen Paare von aneinanderliegenden piezoelektrischen Aktoren 7 und Sensoren 6, welche jeweils über einen Regelkanal 16 der Regel- und Steuereinrichtung 8 verbunden sind. Die piezoelektrischen Elemente 15 sind über ein Vorspannelement 17 zusammengefaßt.

Bei der in Fig. 5 dargestellten Variante nach Fig. 4 weist jedes piezoelektrische Element 15 vier mit Elektroden 18 versehene Bereiche auf, wobei einander zugeordnete Bereiche zweier übereinanderleigender Element 15 jeweils ein Paar aus Aktor- und Sensorelement bilden und über einen Kanal 16 der Regel- und Steuereinrichtung 8 verfügen.

Entsprechend Fig. 6 können auch mehrere Einheiten 19 aus Aktor- und Sensorelementen (z.B. ein Sensorelement, mehrere Aktorelemente) in einer auf die Längsachse 20 der Halterung normal stehenden Ebene 21 angeordnet sein, wobei die Sensorelemente 6 und Aktorelemente 7 aus separaten (in Fig. 6 übereinander angeordneten) piezoelektrischen Elemente 15' bestehen.

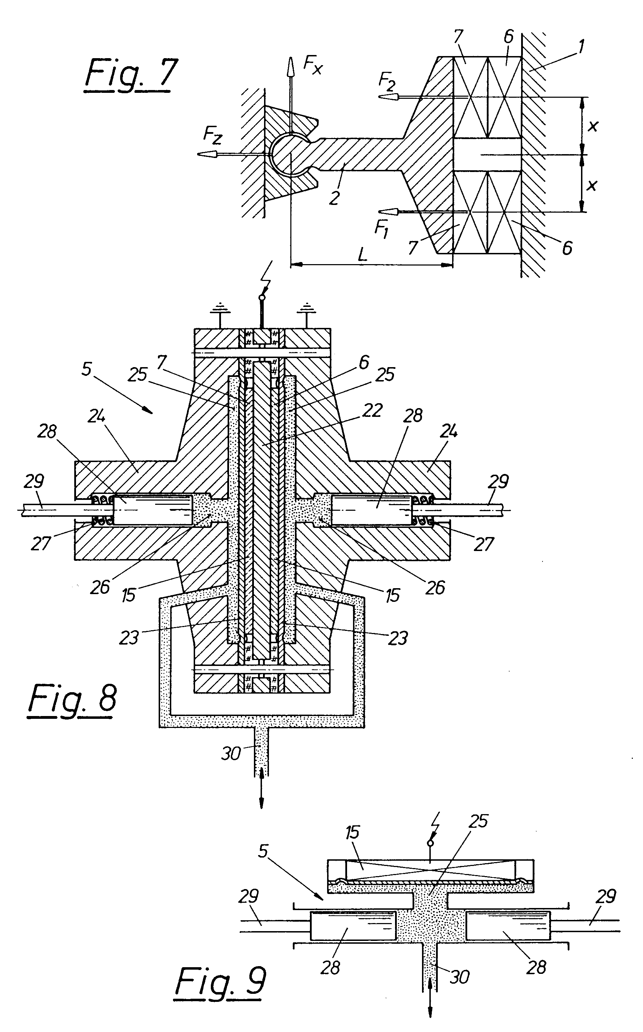

Bei der Auswahl der Aktoren muß auf eine ausreichende Anpassung der mechanischen Impedanz geachtet werden, damit auch wirklich die benötigten Wege und Kräfte erzeugt werden können. In Fig. 4 und 7 erfolgt für die Biegemomente eine Transformation der geringen Stellwege an den piezoelektrischen Elementen hin zu größeren Wegen an den Anlenkpunkten. Sie ist durch das Längenverhältnis zwischen der wirksamen Länge L der Halterung 2 und des Abstandes zwischen den zwei, das Biegemoment produzierende Aktoren, gegeben. Aus der Ausführungsvariante nach Fig. 7 ist besonders deutlich die Erzeugung einer Schubkraft $F_x = (X/L).(F_1 - F_2)$ über ein Biogemoment der Halterung 2 und einer Zug- und Druckkraft $F_z = (F_1 + F_2)$ ersichtlich. Die Aktor- und Sensorelemente stützen sich hier z.B. direkt an der Innenstruktur 1 ab.

Für die longitudinalen Kräfte findet in dieser Konstruktion keine solche Transformation statt. Eine Möglichkeit der Impedanzanpassung besteht darin, die nötigen Wege durch Stapelung mehrerer Aktorelemente 7 zu erzeugen. Eine andere Möglichkeit ist die Verwendung mechanischer Übersetzungen oder hydraulischer Systeme.

In der Ausführungsvariante nach Fig. 8 wird als aktives Element die Kombination eines piezoelektrischen Elements mit einem hydraulischen Kolbensystem gezeigt. Sowohl das Sensorelement 6 als auch das Aktorelement 7 bestehen hier jeweils aus einem großflächigen, piezoelektrischen Element 15. Beide Element sind getrennt durch eine Elekrodenplatte 22 zwischen zwei Membranen 23 eingespannt. An beide Membranen 23 schließen miteinander verbindbare Gehäuseteile 24 der Einrichtung 5 an, welche von den angrenzenden Membranen abgeschlossene Druckräume 25 zur Aufnahme einer Hydraulikflüssigkeit aufweisen. Jeder Druckraum 25 steht mit einem Kolbenraum 26 in Verbindung, dessen von einem Federelement 27 belasteter Kolben 28 mit einer zu einem Anlenkpunkt führenden Strebe 29 verbunden ist. Der Stellweg der piezoelektrischen Elemente 15 wird hier über das Verhältnis der Kolbenfläche Zur Fläche der piezoelektrischen Elemente hochtransformiert, um einen ausreichend großen Kolbenhub zu erzielen. Es ist auch möglich, die Vorrichtung asymmetrisch auszuführen und nur einen Druckraum 25 und ein Kolbensystem vorzusehen.

Der bzw. beide Druckräume 25 können einen hydraulischen Anschluß 30 aufweisen, über welchen Druckwellen in den Druckraum 25 einsteuerbar sind. Diese können beispielsweise zu Schwingungen, verursacht durch Massenkräfte 2. Ordnung der Brennkraftmaschine, phasenverschoben sein. Hier handelt es sich dann um ein gesteuertes aktives Element, das energetisch sehr effizient realisiert werden kann, sodaß für die restliche Geräuschminderung durch das geregelte piezoelektrische Element nur mehr wenig Energie benötigt wird.

Eine andere Ausführung des selben Prinzips zeigt Fig. 9, bei der beide Kolben 28 in platzsparender Weise parallel zu den piezoelektrischen Elementen 15 angeordnet sind.

Grundsätzlich können anstatt der piezoelektrischen Elemente auch z.B. magnetostriktive Elemente aus geeignetem ferromagnetischen Material verwendet werden, etc. Das Prinzip der gezeigten Konstruktion und der Regelelektronik setzt keine bestimmten Sensoren und Aktoren voraus, es müssen jedoch selbstverständlich die Konstruktion und die Elektronik auf die verwendeten Sensoren und Aktoren abgestimmt sein.

**Patentansprüche**

**1.** Brennkraftmaschine mit einer schallführenden Innenstruktur, im wesentlichen bestehend aus Zylinderblock, Zylinderkopf und Kurbelwellenlager, welche über Halterungen mit Einrichtungen zur Geräuschminderung abgestützt ist, wobei die Brennkraftmaschine eine vorzugsweise geschlossene, schalldämmende Außenstruktur (3) aufweist, welche mit der Innenstruktur (1) über zumindest drei der jeweils eine Einrichtung (5) zur Schallminderung aufweisenden Halterungen (2) verbunden ist, **dadurch gekennzeichnet**, daß jede Einrichtung (5) zur aktiven Schallminderung vorgesehen ist und zumindest ein Sensorelement (6) zur Erfassung von Körperschallschwingungen sowie zumindest ein Aktorelement (7) zur Erzeugung gegenphasiger Körperschallschwingungen aufweist, wobei eine elektronische Regel- und Steuereinrichtung (8) vorgesehen ist, über welche die Aktorelemente (7) mit den Sensorelementen (6) in Verbindung stehen, und daß jeweils ein Anlenkpunkt (4) jeder Halterung (2) an der Innen- (1) oder Außenstruktur (3) gelenkig ausgeführt ist.

2. Brennkraftmaschine nach Anspruch 1, **dadurch gekennzeichnet**, daß jeweils ein Anlenkpunkt (4) jeder Halterung (2) als Kugelgelenk (14) ausgeführt ist.

3. Brennkraftmaschine nach Anspruch 2, **dadurch gekennzeichnet**, daß sich die Anlenkpunkte (4) der Halterrungen (2) an Stellen hoher mechanischer Steifigkeit (Impedanz) der Innen- (1) und Außenstruktur (3) befinden.

4. Brennkraftmaschine nach einem der Ansprüche 1 bis 3, **dadurch gekennzeichnet**, daß das Sensorelement (6) und das Aktorelement (7) jeweils aus zumindest einem piezoelektrischen Element (15; 15') bestehen, dessen Elektrodenflächen über zumindest einen Regelkanal (16) der Regel- und Steuereinrichtung (8) verbunden sind.

5. Brennkraftmaschine nach Anspruch 4, **dadurch gekennzeichnet**, daß zumindest zwei piezoelektrische Element (15) über ein Vorspannelement (17) zusammengefaßt sind, wobei jedes piezoelektrische Element (15) zumindest drei mit Elektroden (18) versehene Bereiche aufweist und die einander zugeordneten Bereiche zweier piezoelektrischer Elemente (15) jeweils über einen Regelkanal (16) der Regel- und Steurereinrichtung (8) in Verbindung stehen und ein Paar aus Aktor- (7) und Sensorelement (6) bilden.

6. Brennkraftmaschine nach Anspruch 4, **dadurch gekennzeichnet**, daß mehrere Einheiten (19) aus Aktor- und Sensorelementen, in einer auf die Längsachse (20) der Halterung normal stehenden Ebene (21) angeordnet sind, wobei jedes Sensorelement (6) und jedes Aktorelement (7) jeweils aus einem piozoelektrischen Element (15') besteht, sowie daß jede Einheit (19) über einen eigenen Regelkanal (16) der Regel- und Steuereinrichtung (8) verfügt.

7. Brennkraftmaschine nach Anspruch 4, **dadurch gekennzeichnet**, daß das Sensorelement (6) und das Aktorelement (7) jeweils aus einem scheibenförmigen piezoelektrischen Element (15) bestehen, welche Elemente (15) sich getrennt durch eine zentrale Elektrodenplatte (22) zwischen zwei Membranen (23) befinden, daß an beiden Membranen (23) miteinander verbindbare Gehäuseteile (24) der Einrichtung (5) zur Geräuschminderung angrenzen, wovon zumindest ein Gehäuseteil (24) einen von der angrenzenden Membran (22) abgeschlossenen Druckraum (25) zur Aufnahme einer Hydraulikflüssigkeit aufweist, wobei der Druckraum (25) mit einem Kolbenraum (26) verbunden ist, dessen von einem Federelement (27) belasteter Kolben (28) mit einer zu einem Anlenkpunkt führenden Strebe (29) verbunden ist.

8. Brennkraftmaschine nach Anspruch 7, **dadurch gekennzeich**net, daß der zumindest eine Druckraum (25) einen hydraulischen Anschluß (30) aufweist, über welche an der Brennkraftmaschine abgreifbare, zu Schwingungen verursacht durch Massenkräfte 2. Ordnung phasenverschobene Druchwellen in den Druckraum (25) einsteuerbar sind.

**Claims**

1. Internal combustion engine with a sound-producing inner structure comprising substantially a cylinder block, cylinder head and crankshaft bearings, supported through mountings having means for active noise reduction, the engine having a sound-restraining, preferably closed, outer structure (3) which is connected to the inner structure (1) through at least three mountings (2) each having a device (5) for sound reduction, characterised in that each device (5) is designed for active sound reduction and comprises at least one sensing element (6) for picking up bulk noise vibrations as well as at least one actuating element (7) for generating bulk noise vibrations in anti-phase, there being provided an electronic regulating and control device (8), through which the actuator elements (7) are connected to the sensing elements (6), and that a connecting point (4) of each mounting (2) is in the form of a pivotal connection to the inner structure (1) or outer structure (2) respectively.

2. Internal combustion engine according to claim 1, characterised in that a respective connecting point (4) of each mounting (2) to the inner structure (1) or outer structure (3) is in the form of a ball joint (14).

3. Internal combustion engine according to claim 2 characterised in that the points of connection (4) of the mountings (2) are present at points of the inner structure (1) and outer structure (3) of high mechanical stiffness (impedance).

4. Internal combustion engine according to one of claims 1 to 3 characterised in that the sensing element (6) and the actuating element (7) each comprise at least one piezo-electric element (15; 15'), of which the electrode surfaces are connected through at least one control channel (16) of the regulating and control device (8).

5. Internal combustion engine according to claim 4, characterised in that at least two piezo-electric elements (15) are combined together through a pre-loading element (17), each piezo-electric element (15) having at least three regions provided with electrodes (18) and the associated regions of two piezo-electric elements (15) each being connected through a control channel (16) of the regulating and control device (8) and forming a pair of actuating elements (7) and sensing elements (6).

6. Internal combustion engine according to claim 4 characterised in that a number of units (19) of actuating and sensing elements are arranged in a plane (21) which is perpendicular to the longitudinal axis (20) of the mounting, each sensing element (6) and each actuating element (7) respectively comprising a piezo-electric element (15'), and that each unit (19) feeds the regulating and control device (8) through its own control channel (16).

7. Internal combustion engine according to claim 4 characterised in that the sensing element (6) and the actuating element (7) each comprise a disc-shaped piezo-electric element (15), the elements (15) being present between two membranes (23), separated by a central electrode plate (22), that the two membranes (23) are bounded by mutually connectable housing components (24) of the device (5) for sound reduction, of which at least one housing component (24) has a pressure chamber (25) closed off by the bounding membrane (22) for receiving a hydraulic fluid, the pressure chamber (25) being connected to a piston chamber (26) of which the piston (28) loaded by a spring element (27) is connected to a strut (29) leading to a connecting point.

8. Internal combustion engine according to claim 7 characterised in that the at least one pressure chamber (25) has a hydraulic connection (30) through which phase-shifted pressure waves can be introduced into the pressure chamber (25), derived at the engine giving rise to vibrations by mass forces of the second order.

**Revendications**

1. Moteur à combustion interne avec une structure interne conductrice du son, se composant essentiellement d'un bloc-cylindres, d'une culasse de cylindres et de paliers de vilebrequin ; moteur qui est supporté par des fixations avec des dispositifs destinés à réduire le bruit, le moteur à combustion interne comportant une structure extérieure (3) de préférence fermée, amortissant le bruit, qui est liée à la structure intérieure (1) par au moins trois des fixations (2) comportant chacune un dispositif (5) pour réduire le son, caractérisé en ce que chaque dispositif (5) est prévu pour réduire activement le son et comporte au moins un élément capteur (6) pour saisir des vibrations acoustiques du corps, ainsi qu'au moins un élément acteur (7) destiné à créer des vibrations acoustiques du corps en opposition de phase, un dispositif de régulation et de commande (8) électronique étant prévu, par l'intermédiaire duquel les éléments acteurs (7) se trouvent en liaison avec les éléments capteurs (6), et en ce qu'un point d'ancrage (4) articulé est réalisé à chaque fixation (2) sur la structure intérieure (1) ou extérieure (3).

2. Moteur à combustion interne selon la revendication 1, caractérisé en ce que respectivement un point d'ancrage articulé (4) est réalisé à chaque fixation par articulation sphérique (14).

3. Moteur à combustion interne selon la revendication 2, caractérisé en ce que les points d'articulation (4) des fixations (2) se trouvent à des endroits de grande rigidité mécanique (impédance) de la structure intérieure (1) et extérieure (3).

4. Moteur à combustion interne selon une des revendications 1 à 3, caractérisé en ce que l'élément capteur (6) et l'élément acteur (7) sont composés respectivement d'au moins un élément piézo-électrique (15; 15'), dont les faces d'électrodes sont reliées par au moins un canal de réglage (16) du dispositif de régulation et commande (8).

5. Moteur à combustion interne selon la revendication 4, caractérisé en ce qu'au moins deux éléments piézo-électriques (15) sont réunis par l'intermédiaire d'un élément de précontrainte (17), chaque élément piézo-électrique (15) ayant au moins trois zones munies d'électrodes (18) et les zones associées l'une à l'autre de deux éléments piézo-électriques (15) sont en liaison respective par un canal de réglage (16) du dispositif de régulation et de commande (8) et forment une liaison constituée d'un élément acteur (7) et d'un élément capteur (6).

6. Moteur à combustion interne selon la revendication 4, caractérisé en ce que plusieurs unités (19) composées d'éléments acteurs et capteurs sont disposées dans un plan (21) normal à l'axe longitudinal (20) de la fixation, chaque élément capteur (6) et chaque élément acteur (7) se composent respectivement d'un élément piézo-électriques (15'), ainsi qu'en ce que chaque ensemble (19) dispose d'un canal de réglage propre (16) du dispositif de réglage et de commande (8).

7. Moteur à combustion interne selon la revendication 4, caractérisé en ce que l'élément capteur (6) et l'élément acteur (7) sont composés chacun d'un élément piézo-électrique (15) en forme de plaque, éléments (15) qui se trouvent séparés par une plaque d'électrodes centrale (22) entre deux membranes (23), en ce que des parties de boîtier (24) connectables entre elles du dispositif (5) de réduction du bruit sont attenantes aux deux membranes (23), parties de boîtier (24) dont au moins une comporte un espace de compression (25) fermé par la membrane voisine (22) et destiné à recevoir un fluide hydraulique, l'espace de compression (25) étant relié à une chambre de piston (26) dont le piston (28) chargé par un élément de ressort (27) est relié à une tige (29) menant au point articulé.

8. Moteur à combustion interne selon la revendication 7, caractérisé en ce qu'au moins un espace de compression (25) comprend une connexion hydraulique (30), par laquelle on peut introduire et commander des ondes de pression provenant du moteur à combustion interne, donnant lieu à des vibrations, décalées en phase par des forces de deuxième ordre dues à la masse.

_Fig. 1_

_Fig. 2_

_Fig. 3_

_Fig. 4_

_Fig. 5_

_Fig. 6_

*Fig. 7*

*Fig. 8*

*Fig. 9*